(19) Europäisches Patentamt
European Patent Office
Office européen des brevets

(11) Publication number: **0 088 541**
**B1**

(12) # EUROPEAN PATENT SPECIFICATION

(45) Date of publication of patent specification: **03.01.90**

(51) Int. Cl.$^5$: **C 08 G 2/36**

(21) Application number: **83300806.3**

(22) Date of filing: **17.02.83**

(54) **Process and apparatus for continual melt hydrolysis of acetal copolymers.**

(30) Priority: **19.02.82 US 350502**

(43) Date of publication of application:
**14.09.83 Bulletin 83/37**

(45) Publication of the grant of the patent:
**03.01.90 Bulletin 90/01**

(84) Designated Contracting States:
**DE FR GB IT NL**

(56) References cited:
**DE-A-3 020 086**
**FR-A-2 336 426**
**GB-A- 986 925**
**US-A-3 418 280**

(73) Proprietor: **CELANESE CORPORATION**
**1211 Avenue of the Americas**
**New York New York 10036 (US)**

(72) Inventor: **Chatterjee, Ananda Mohan**
**14411 Locke Lane**
**Houston Texas (US)**

(74) Representative: **De Minvielle-Devaux, Ian Benedict Peter et al**
**CARPMAELS & RANSFORD 43, Bloomsbury Square**
**London WC1A 2RA (GB)**

**EP 0 088 541 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to an improved process for producing stabilised acetal copolymers and, in particular, to a process which enhances the thermal stability of acetal copolymers. The invention also relates to an apparatus for use in the process.

Acetal copolymers are characterised by a predominantly carbon-oxygen oxymethylene backbone occasionally interrupted by a comonomer unit having a carbon-carbon linkage. The simple linear chain structure and the relative shortness of the carbon-oxygen bond impart properties of high crystallinity and relatively high density to acetal resins in the solid state. Commercial products of acetal resins have high stiffness, good dimensional stability, high tensile and impact strength, good abrasion resistance and a low coefficient of friction, all of which make acetal resins excellently suited for, among other things, replacement of metals and provision of fatigue-resistant rigid articles and/or parts. Typically, such items are manufactured as shaped articles by injection moulding or extrusion processes.

The copolymers forming acetal resins, however, contain monomeric units which have comparatively unequal stability to degradation. Furthermore, resistance of the copolymer to degradation depends, in many cases, as much upon the relative position of the monomeric units within the polymeric chain as it does upon the inherent monomeric structure. For example, if a copolymer is susceptible to degradation by a mechanism which attacks the ends of the polymeric chain, it can be seen that if the ends of the molecules are susceptible to degradation, the copolymer will have less stability than one in which the molecule ends are relatively stable.

Acetal copolymers, as has been known for years, may be prepared, for instance, by the polymerisation of trioxane—a cyclic trimer of formaldehyde—and ethylene oxide; they have recurring oxymethylene groups, $—OCH_2—$, directly attached to each other as well as oxyethylene groups: $—OCH_2CH_2O—$, interspersed throughout the polymeric chain. Oxymethylene copolymers of this type are described in our U.S. Patent No. 3,027,352 (Walling). Such copolymers contain polymeric chains having 60 to 99.6 percent oxymethylene units some of which form the end groups of such chains. These copolymers are subject to physical degradation under high temperature conditions due to the decomposition of formaldehyde units having a terminal hydroxyl group, i.e. $-(CH_2O)_{n}H$. Accordingly, even though acetal resins possess many excellent physical properties, they are subject to a certain degree of degradation, particularly under the influence of heat, unless they have been subjected to treatment which effectively eliminates the relatively unstable characteristics inherent therein.

It has been discovered that thermal degradation of acetal resins resulting from the splitting off of successive formaldehyde units, commonly referred to as a "zipper" reaction, is halted when the reaction reaches a comonomer on the polymeric chain having a comparatively stable structure, such as the carbon-to-carbon bond present in oxyethylene. To that end, efforts over the years to improve the thermal stability of acetal copolymers have been directed toward eliminating the terminal polyoxymethylene groups as completely as possible. The primary method developed for removing the oxymethylene end groups is by hydrolysis, which has the effect of shifting the hydrogen atom of the terminal hydroxyl group to the oxygen atom of the next adjacent oxymethylene group, while simultaneously detaching the endmost oxymethylene group from the polymeric chain.

Exploration into the chemistry and technology necessary to sustain efficient production level hydrolysis of polyoxymethylene copolymers has led to several further developments in the art of commercial acetal resin production. For example, our U.S. Patent No. 3,174,948 (Westfield) describes an aqueous alkanol solvent (for copolymers) which allows for complete solution of the copolymer at lower temperatures than either water or the alkanol alone. In our U.S. Patent No. 3,219,623 (Berardinelli) a process for stabilising normally solid oxymethylene copolymers is described which includes a hydrolysis reaction of the copolymer under non-acidic, and preferably alkaline, conditions with a hydroxy-containing material such as water or alcohol.

U.S. Patent No. 3,301,821 (Asmus) discloses a process for thermostabilising copolymers having terminal oxymethylene groups by splitting off the terminal oxymethylene groups when the copolymer is treated at a temperature of 100°C to 160°C at autogenous pressure with a saturated vapour mixture of water, a volatile organic swelling agent and a volatile base for catalysing the removal of oxymethylene groups. The copolymer is suspended in a wire mesh basket within an autoclave wherein the reactive vapour atmosphere is generated. In order to prevent discoloration which may occur, it is suitable to add urea to the liquid phase in an amount of 0.5 to 5% based on the weight of the liquid phase.

Our U.S. Patent No. 3,318,848 (Clarke) describes a melt hydrolysis process which involves a mixture of the copolymer and a reactant selected from the group consisting of water, alcohols and mixtures thereof. The polymer melt is hydrolysed in a single reaction zone at a temperature of from 160°C to 240°C and a pressure in the range of from 150 to 10,000 psia (1034 to 68947 kPa). Our U.S. Patent No. 3,418,280 (Orgen) shows an improvement in the melt hydrolysis processes described in the Clarke Patent which improvement includes reacting the polymer with the reactants at a pH between 9.5 and 11.0.

In both processes the polymer-reactant system is a single phase system reacted in a reaction zone which is usually a single screw extruder. Such a reactor has a very limited degree of mixing and can handle only a low level of hydrolysis solvent. Furthermore, the devolatilisation capacity is very limited.

A further method of hydrolysis described in our U.S. Patents Nos. 3,419,529 (Chase); 3,428,605 (Smith)

and 3,505,292 (Smith) is accomplished by forming a slurry of solid polymer particles in a liquid hydrolysis reaction medium while the slurry is transported to a further stage of polymer treatment without substantial backmixing. The hydrolysis medium which is ideally composed of water, a water-soluble non-acidic organic compound having an oxygen atom directly bonded to a carbon atom, and, in accordance with U.S. Patent No. 3,428,605 (Smith), between 50 and 99 weight percent of trioxane, is maintained at a temperature causing the polymer to swell; but not to dissolve, become tacky or agglomerate in the hydrolysis medium. A suitable type of equipment used to continuously convey the slurry while carrying out the chemical hydrolysis reaction in this process is a non-backmixing screw conveyor.

More recently, our U.S. Patents Nos. 3,839,267 and 3,853,806 (Golder) describe a heterogeneous melt hydrolysis process for stabilising copolymers containing oxymethylene end groups in which the polymer is reacted while in the molten state whereas the reactant mixture is in the gaseous or vapour state—thus giving rise to the term heterogeneous. As in the previous hydrolysis process, the hydrolysis reaction is usually intended to be carried out in a single screw extruder.

While the hydrolysis of acetal copolymers increases the thermal stability of said copolymers, a side product of the principal reaction, formaldehyde, simultaneously becomes immediately available as a reactant for several other reactions within the reaction zone which adversely affect the end product. For example, traces of oxygen can oxidise formaldehyde, especially at elevated temperatures, to acidic species like formic acid, performic acid, etc.

Furthermore, the base-generating catalyst triethylamine, TEA, which is commonly used in hydrolysis reactions, can react (1) with formic acid to form triethylammonium formate:

$$(C_2H_5)_3N+H{-}\overset{\overset{\displaystyle O}{\|}}{C}{-}OH=(C_2H_5)_3NH^{\oplus}COOH^{\ominus};$$

and (2) with traces of HF (which may be present as a result of using $BF_3$ as a polymerisation catalyst) to form triethylammonium fluoride:

$$(C_2H_5)_3N+HF=(C_2H_5)_3NH^{\oplus}F^{\ominus}$$

Both triethylammonium formate and triethylammonium fluoride have been demonstrated to induce degradation of acetal copolymers.

Formaldehyde may also undergo another reaction under alkaline conditions, namely aldol-type condensation to form formose sugars according to the equation below:

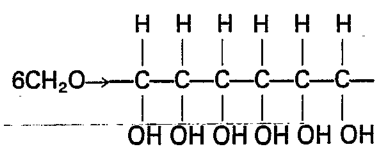

which eventually lead to undesirable formation of colour in the acetal copolymer product.

Thus, in addition to the desired hydrolysis reaction, a number of undesirable side reactions can simultaneously occur inside the reactor, which, because, of the very nature of such reactions, can adversely affect the final properties of the copolymers. It is clear, therefore, that an efficient removal of formaldehyde, TEA and other undesirable species (e.g., formic acid, HF, etc.) which might be present during hydrolysis should improve both the thermal stability and other qualities of the copolymer. In the case of solution type hydrolysis, many of the harmful products may be disposed of by a washing treatment, but since melt-hydrolysed copolymer does not undergo a thorough washing treatment, some of the harmful products are retained in melt-hydrolysis copolymer thereby causing an inferior quality product. This is an unfortunate problem in the area of commercial acetal resin production because the melt hydrolysis method of producing oxymethylene copolymers consumes as much as one third less energy than the solution type hydrolysis.

The present invention makes it possible to overcome the problems, such as those itemised above, associated with undesirable side products and side reactions resultant therefrom during melt-hydrolysis of acetal copolymers.

Furthermore, the present invention obviates the limitations of the Clarke process and apparatus as set forth above, thereby allowing a more efficient hydrolysis process, which, in turn, reduces the residence time of the copolymer in the hydrolysis reactor. This adds to the quality of the resultant polymer, by, for one thing, reducing undesirable coloration of the resin product.

As a result of this invention, acetal copolymers may be produced by means of the more energy-efficient melt hydrolysis process which have enhanced thermal stability, but which do not have concomitant physical defects such as discoloration.

By the present invention there is provided an improved method for stabilising acetal copolymers by hydrolysing the copolymer product in a low-energy reaction process wherein undesirable side products are

continuously and efficiently removed without the need for thorough washing and/or an additional energy-consuming step. Specifically, the present invention provides a process for producing stabilised acetal copolymer which comprises:

forming a melt of unhydrolyzed acetal copolymer in a single screw extruder;

extruding the melt into a reaction zone provided with a means for mixing according to the principle of flow division and rearrangement wherein the melt is reacted, with a reactant comprising (a) water, an organic hydroxy-containing compound or a mixture thereof and (b) a compound that produces a hydroxide in the presence of the water and/or organic hydroxy-containing compound, at a temperature of from 160° to 240°C and a pressure of from 150 to 10,000 psia (1034 kPa to 68947 kPa) for a time of from 30 seconds to 15 minutes; and

passing the reactants into a devolatilisation zone arranged immediately after the said reaction zone and wherein undesirable volatile side-products are removed from said copolymer.

In certain embodiments, the compound (b) is present in the reactant in an amount of 0.5% to 85.0% by weight of the reactant.

The invention is also an apparatus for performing this process comprising:

a single screw extruder for melting said copolymer;

a reaction zone connected to the output of said single screw extruder, said reaction zone comprising a static mixer; and

a devolatilisation zone arranged immediately after said reaction zone comprising a vented screw extruder.

The devolatilisation zone preferably has more than one devolatilisation port and a vacuum source from which negative pressure is available for application to the devolatilisation ports so that the undesired products may be effectively removed.

For a better understanding of the present invention, reference is made to the following description, taken in conjunction with the accompanying drawing and examples.

Figure 1 is a schematic view of an apparatus designed to implement the process of the present invention;

Figures 2 and 3 are graphs comparing the thermal stability of melt hydrolysed acetal copolymers without devolatilisation to melt hydrolysed acetal copolymers with devolatilisation. (The vacuum of 15 inches in Figure 2 is equivalent to 50.8 kPa, and the vacuum of 9 inches in Figure 3 is equivalent to 30.5 kPa.);

Figures 4 and 5 are graphic depictions of test results run to show the effect of the degree of mixing on the thermal stability of acetal copolymers prepared according to the present invention. (The vacuum of 16 inches in Figure 4 is equivalent to 54.2 kPa, and the vacuum of 17 inches in Figure 5 is equivalent to 57.6 kPa.);

Figure 6 is a graph indicating the effect of residence time on the colour properties of the resins of the present invention. (The vacuum of 12 inches in Figure 6 is equivalent to 40.6 kPa); and

Figure 7 is a schematic view of a static mixer which may be used in a preferred embodiment of the present invention.

Acetal copolymers of the present invention are preferably prepared by the copolymerisation of trioxane, a cyclic trimer of formaldehyde, with a cyclic ether having the structure

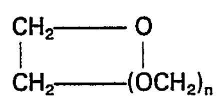

where n is an integer from zero to 2. Among the specific cyclic ethers which may be used are ethylene oxide, 1,2-dioxalane; 1,3,5-trioxepane, 1,3-dioxane; trimethylene oxide; pentamethylene oxide; 1,2-propylene oxide; 1,2-butylene oxide; neopentyl formal; pentaerythritol diformal; paraldehyde; tetrahydrofuran and butadiene monoxide.

As used in the present specification and claims, the term "oxymethylene" includes substituted oxymethylene, where the substituents are inert with respect to the reactions in question, that is, the substituents are free of interfering functional groups and will not introduce undesirable reactions. As used in the specification and claims of this application, the term "copolymer" means polymers having two or more monomeric groups, including terpolymers and higher polymers. Suitable terpolymers include those disclosed in our U.S. Patent No. 3,686,142 (W. E. Heinz and F. B. McAndrew).

The preferred polymers which are treated in this invention are thermoplastic materials having a melting point of at least 150°C and are normally millable at a temperature of 200°C. They have a number average molecular weight of at least 10,000. These polymers have a high thermal stability before treatment in accordance with this invention but this stability is markedly improved by such treatment.

Suitable polymers having a melting point above 150°C include normally solid, oxymethylene copolymers, the molecules of which contain from 60 to 99.6 mol percent of comparatively unstable monomeric oxymethylene units interspersed with comparatively stable monomeric —OR— units wherein R is a divalent radical containing at least two carbon atoms directly linked to each other and positioned in

the polymer chain between the two valences, with any substituents on said R radical being inert, at least part of the terminal portions of said molecules comprising said unstable monomeric units.

The preferred polymers which are treated in this invention have an inherent viscosity of at least one (measured at 60°C in an 0.1 weight percent solution in p-chlorophenol containing 2 weight percent of α-pinene). After treatment, the preferred copolymers exhibit remarkable alkaline stability.

The preferred catalysts used in the preparation of the desired copolymers are boron fluoride and boron fluoride co-ordinate complexes with organic compounds, particularly those in which oxygen or sulphur is the donor atom.

The co-ordinate complex of boron fluoride may, for example, be a complex with a phenol, an ether, an ester or a dialkyl sulfide. Boron fluoride dibutyl etherate, the co-ordinate complex of boron fluoride with dibutyl ether, is a preferred co-ordinate complex. The boron fluoride complex with diethyl ether is also very effective. Other boron fluoride complexes which may be used are the complexes with methyl acetate, with ethyl acetate, with phenyl acetate, with dimethyl ether, with methyl phenyl ether and with dimethyl sulphide. Suitable catalysts are disclosed in our U.S. Patents 2,989,505, 2,989,506, 2,989,507, 2,989,509, (Donald E. Hudgin and Frank M. Berardinelli); 2,989,510 (George J. Bruni) and 2,989,511 (Arthur W. Schnizer).

The co-ordinate complex of boron fluoride should normally be present in the polymerisation zone in amounts such that its boron fluoride content is from 0.001 to 1.0 weight percent based on the weight of the monomers in the polymerisation zone. Preferably, amounts from 0.003 to 0.1 weight percent are used.

The monomers in the polymerisation zone are preferably anhydrous or substantially anhydrous. Small amounts of moisture, such as may be present in commercial grade reactants or may be introduced by contact with atmospheric air, will not prevent polymerisation, but should be removed for best yields.

In preparing the preferred copolymers, the trioxane, cyclic ether and catalysts are normally dissolved in a common anhydrous solvent such as cyclohexane, and permitted to react in a sealed reaction zone. The temperature in the reaction zone may normally vary from 0°C. to 120°C. The period of reaction may normally vary from 5 minutes to 72 hours. Pressures from sub-atmospheric to 100 atmospheres (about 100 bar), or more, may generally be used, although atmospheric pressure is preferred.

The chemical constitution of the cyclic ether must be considered. Thus, 1,3-dioxolane contains both an oxymethylene group and an oxyethylene group. Its incorporation into the copolymer molecule increases both the oxymethylene and the oxyethylene content of the polymer molecule.

In general, the cyclic ether is present in the reaction mixture in amounts from 0.2 to 30 mol percent, based on the total mols of monomer. The optimum proportion will depend on the particular copolymer desired, the expected degree of conversion and the chemical constitution of the cyclic ether used.

The copolymers produced from the preferred cyclic ethers have a structure substantially composed of oxymethylene and oxyethylene groups in a ratio from 250:1 to 1.3:1.

Upon completion of the polymerisation reaction it is desirable to neutralise the activity of the polymerisation catalyst since prolonged contact with the catalyst degrades the polymer. The polymerisation product may be treated with an aliphatic amine, such as tri-n-butylamine or triethylamine, in stoichiometric excess over the amount of free catalyst in the reaction product, and preferably in an organic wash liquid which is a solvent for unreacted trioxane. Or, if desired, the reaction product may be washed with water which neutralises catalyst activity. A detailed description of suitable methods of neutralising catalyst activity may be found in our U.S. Patent No. 2,989,509 (Donald E. Hudgin and Frank M. Berardinelli).

In accordance with the present invention the comparatively unstable monomeric portions or units of the polymer may be removed by a process which comprises treating the polymer with a reactant under conditions such that the polymer-reactant system is in liquid form and continuing the reaction at an elevated temperature and pressure and for a period of time sufficient to remove the comparatively unstable portions or units from the ends of the polymer molecules so that the molecules are terminated by comparatively stable units. The temperature, pressure and time conditions are as defined in claim 1.

In order that the acetal copolymer should be in appropriate form for the reaction, it should be in liquid (ie. melt) form.

The polymer-reactant system can be obtained in liquid form by separately melting the polymer and adding the reactant thereto under such conditions that the polymer reactant system remains liquid.

When the copolymer is a heterogeneous copolymer with the comparatively unstable units being oxymethylene units, the appropriate chemical treatment is an "hydrolysis" treatment under alkaline conditions. In a preferred embodiment the polymer is reacted with from 2 weight percent to 40 weight percent of the preferred hydrolysis reactant. The reaction must take place at an elevated temperature and pressure such that the polymer-reactant system will remain in a liquid condition during the reaction. Thus the treatment may be referred to as a "molten-hydrolysis" or "melt hydrolysis". The hydrolytic reactant may be water or an organic hydroxy-containing compound such as a primary, secondary or tertiary aliphatic or aromatic alcohol or mixture thereof. Suitable alcohols include methyl alcohol, ethyl alcohol, n-propyl alcohol, isopropyl alcohol, secondary butyl alcohol, tertiary butyl alcohol and other aliphatic alcohols; and benzyl alcohol, α-phenylethyl alcohol, β-phenylethyl alcohol, ortho-methylbenzyl alcohol, diphenyl carbinol, triphenyl carbinol and other aromatic alcohols. As used herein the term "hydrolysis"

includes the reaction of the polymer with water or the aforementioned organic hydroxy-containing materials or mixtures thereof.

The molten polymer is subjected to the hydrolysis under alkaline conditions. The alkaline material is preferably water-soluble, or soluble in the organic hydroxy-containing material, and may be a strongly basic hydroxide such as the hydroxide of an alkali metal or alkaline earth metal, or it may be the salt of a strong base and weak acid, or it may be ammonia or an organic base, such as an amine or an amidine.

In certain embodiments, an alkaline material may be present in the chemical reaction in an amount of 0.001 weight percent to 1.0 weight percent, preferably from 0.001 weight percent to 0.01 weight percent.

Alkaline hydrolysis is employed since it is faster than neutral hydrolysis and since the alkaline material will neutralise any excess polymerisation catalyst which might otherwise tend to degrade the polymer during the hydrolysis step. Also, the products of the hydrolysis are acidic and would otherwise cause the system to become acidic, which might have deleterious effects on the polymer.

After the polymerisation reaction it may be desirable to subject the polymer to washing and drying in order to remove unreacted monomers, solvent and catalyst residues. However, in a preferred embodiment of this invention the copolymer is subjected to the melt hydrolysis treatment promptly after the completion of the polymerisation reaction. In a particularly preferred embodiment of this invention, the active catalyst is neutralised by mixing the polymerisation reactor product with a material which may also serve as the chemical reactant for the hydrolysis. Specifically water, or a mixture of an alcohol, such as methanol, and water, may be used in which small amounts of ammonia or an amine such as triethylamine may be present. The reactant may include unreacted materials from the polymerisation reaction, such as trioxane. These materials do not ordinarily have an undesirable effect on the subsequent melt hydrolysis treatment, and may therefore be regarded as inert for this reaction.

In a preferred embodiment the reactant should be used in an amount from 2 weight percent to 40 weight percent of the polymer. The polymer reactant system is treated and maintained under conditions such that the polymer-reactant system remains in a liquid form. Thus satisfactory results may be obtained below the melting point of the polymer itself, as long as the polymer-reactant system is liquid. For example, a system containing 80 weight percent of a trioxane 2% ethylene oxide copolymer and 20 weight percent of a 60% water-40% methanol reactant has a solution point about 125°C. which is considerably below the melting point of the copolymer itself. However, temperatures somewhat above the melting point of the system are preferred because the hydrolysis reaction rate increases with increase in temperature. The polymer-reactant system is in a single phase. The melt hydrolysis reaction will normally not take place until sufficiently elevated temperatures and pressures are reached to place the polymer-reactant system in liquid form and the materials must be held at such temperature and pressure until the desired amount of unstable portions are removed from the ends of the polymer molecules.

On some occasions it may be desirable to mix the polymer with a larger amount of reactant and after the catalyst has been neutralised remove a portion of the reactant by filtering, vaporisation, etc. in order to retain only between 2 and 40 weight percent of reactant present with the polymer during the melt hydrolysis reaction.

Furthermore, it may be desirable to neutralise the catalyst and then filter, wash and dry the polymer, whereupon the polymer may then be conveniently kept until it is subjected to the melt hydrolysis treatment at a later time.

It may also be desirable to incorporate one or more chemical stabilisers into the copolymer in order to bring its thermal degradation rate even lower. The proportion of stabiliser incorporated depends upon the specific stabiliser used. A proportion from 0.005 to 10 weight percent (based on the weight of polymer) has been found to be suitable for most stabilisers.

One suitable stabiliser system is a combination of (1) an anti-oxidant ingredient, such as phenolic anti-oxidant, and most suitably a substituted bisphenol, and (2) an ingredient to inhibit chain scission, generally a compound of a polymer containing trivalent nitrogen atoms.

A suitable class of substituted bisphenols are the alkylene bisphenols including compounds having from 1 to 4 carbon atoms in the alkylene group and having from zero to 2 alkyl substituents on each benzene ring, each alkyl substituent having from 1 to 4 carbon atoms. The preferred alkylene bisphenols are 2,2'-methylene bis(4-methyl-6-tertiary butyl phenol) and 4,4' - butylidene bis(6 - tertiary butyl - 3 - methyl phenol). Suitable phenolic stabilisers other than alkylene bisphenols include 2,6 - ditertiary butyl - 4 - methyl phenyl, octyl phenol and p-phenyl phenol.

Suitable scission inhibitors include carboxylic polyamides, polyurethanes, substituted polyacrylamides, polyvinyl pyrrolidone, hydrazides, compounds having 1 to 6 amide groups, proteins, compounds having tertiary amine and terminal amide groups, compounds having amidine groups, cycloaliphatic amine compounds and aliphatic acylureas. The stabilisers may be present in the melt hydrolysis step or they may be added to the hydrolysed polymer after the melt hydrolysis step.

In any event, the hydrolysis reactor of the present invention utilises the principle of flow division and rearrangement of the melted copolymer/reactant system in order to ensure intimate contact between the copolymer and the hydrolysis reactants. Such mixing is effected by static mixer elements—typically 2 to 15 in number—arranged in series. One such mixing apparatus is a Koch mixer which includes separate elements (shown in Figure 7), each element of which contains several essentially planar corrugated layers which intersect to form a multitude of mixing cells within the element. The stream of copolymer/reactant

mixture entering a mixing element is rearranged due to extensional and shearing forces, i.e., the linear pressure exerted on the mixture stream by the melt extruder forces the stream to be separated by the element layers, thereby dividing the throughput into new streams, each of which leaves the respective cell in a different direction. Each new stream upon arriving at the next element is rearranged and again divided to form subsequent new streams, each of which departs in a new direction for further rearranging and sub-division. While one example of a static mixer is shown herein the invention is not to be limited thereby since there are several types of static mixers available, such as the mixers produced by the Kenics Corporation, The Dow Chemical Company, Dow Badische Company, and others, which could be effectively utilised within the scope of the present invention. Even though this method of mixing in the hydrolysis reaction zone requires no additional energy, it nevertheless provides thorough contact between the copolymer and the reactant so that an efficient hydrolysis of the copolymer is effected.

After the melt hydrolysis reaction has been completed and a satisfactory amount of unstable monomeric units have been removed from the polymer molecules the present invention includes a stage wherein the copolymer/reactant mixture is introduced into a devolatilisation zone wherein the remaining reactant is extracted from the polymer and the melt hydrolysis products, e.g., formaldehyde, HF, formic acid, etc., are removed. In a preferred embodiment of the invention, the devolatilisation zone consists of a multi-vented single screw extruder to which a vacuum source is applied to provide negative pressure sufficient to remove volatile products which are not evicted from the reactor by means of autogenous over-pressure. A suitable arrangement for such a devolatilisation zone consists of an extruder having three vent ports which allow post-hydrolysis devolatilisation to proceed in stages. The first vent, situated immediately after the exit of the hydrolysis reactor, is essentially a pressure-release port to which no vacuum is applied since the volatile products resulting from melt-hydrolysis create an autogenous over-pressure sufficient to expel such products into the atmosphere. Subsequent vents, however, must be supplied with negative pressure in varying degrees to ensure maximum removal of the aforementioned unwanted side products.

In Figure 1 there is shown an apparatus suitably configured for carrying out the unique hydrolysis process of the present invention. The required process steps progress from the left hand side, where the unhydrolysed copolymer is melted in a single-screw extruder 10, to the right hand side where stabilised copolymer exits the process. From the screw extruder 10, molten acetal copolymer is transported to hydrolysis reactor 20. Prior to introduction into the reactor, the molten copolymer is combined with a solvent containing hydrolysis reactant which is supplied to the process by means of reactant solvent pump 16 via solvent supply line 17. The reactor 20 is preferably constructed of a series of static mixer elements firmly housed in a corrosion-resistant jacket, such as a stainless steel cylinder.

The copolymer/reactant combination is thoroughly mixed by flow division and rearrangement, thereby ensuring complete hydrolysis of the copolymer without consuming additional energy to power a mixing mechanism. After the copolymer has undergone hydrolysis in the reactor 20, the resulting combination, which includes hydrolysed copolymer, solvent and hydrolysation side products, is immediately subjected to devolatilisation in a multi-vented screw extruder 30.

Since an autogenous pressure greater than atmospheric pressure is built up as a result of the formation of volatile side products, the initial vent port need not be provided with a vacuum in order to remove the off gas indicated by exhaust arrow 31. Due to the reduction in autogenous pressure caused by the escape of volatiles at the first vent port, subsequent vent ports should be provided with a vacuum, depicted herein by arrows 32 and 33, to facilitate efficient removal of remaining undesirable side products and/or additional products resulting from secondary reaction of said side products.

Acetal copolymers produced in accordance with the present invention have a high thermal stability and typically possess very acceptable colour quality, both of which are demonstrated by the following examples.

## Examples

Experiments were conducted to determine the effect of the melt hydrolysis process of the present invention on the thermal stability of acetal copolymers prepared according to the method set forth above. Specifically, trioxane-ethylene copolymer produced in a polymerisation reactor was melt hydrolysed with devolatilisation and without devolatilisation at different flow rates which consequently produced different residence times in the hydrolysation zone. The devolatilisation zone used in the experiments, the results of which are indicated at Figure 2, was a single screw extruder having only a single vent port to which a vacuum was applied. Thermal stability, determined herein by the rate at which the copolymer loses weight at elevated temperature, is designated as $K_d$ (which was determined at a temperature of 230°C). and is plotted in Figure 2 against the different residence times to compare the thermal stability of melt hydrolysed acetal copolymer without devolatilisation to the thermal stability of melt hydrolysed acetal copolymer which had been devolatilised. Prior to testing the thermal stabilities, a stabiliser system such as one of those described hereinabove was incorporated into the hydrolysed copolymer. The base for hydrolysis used in these runs was 1% triethylamine in water solution which was metered into the process at a rate which fixed the ratio of the base to the copolymer at 10% by weight. Figure 2 clearly shows that devolatilisation aids in lowering the $K_d$ thus indicating a higher thermal stability.

Results of further experiments testing the effect of devolatilisation on thermal stability are depicted in Figure 3. Unlike the previously-reported experiments, a vacuum-supplied single vented screw extruder was used as the devolatilisation zone in these experiments. The stabiliser system was combined with the copolymer before testing the thermal stability. Again, the results clearly indicate that an acetal copolymer which is subjected to devolatilisation immediately after the hydrolysis zone exhibit a higher thermal stability, i.e., lower $K_d$, than melt hydrolysed acetal copolymer not similarly subjected to a vacuum.

A preferred embodiment of the present invention involves the degree of mixing to which the acetal copolymer is subjected during the hydrolysis reaction itself, i.e., while the melted acetal copolymer/base is in the hydrolysis zone. Accordingly, experiments were conducted to examine the effect of the degree of mixing on the thermal stability of acetal copolymer, the results of which are graphed on Figures 4 and 5. The mixing portion of the hydrolysation zone comprised Koch mixing elements secured within a stainless steel jacket. From Figures 4 and 5 it can be seen that, ideally, the number of mixing elements which should be used for a residence time of up to 2 minutes is between 4 and 12, and preferably about 8 elements, to maximise the thermal stability of the resultant copolymer.

While these results are indicative of the positive effect devolatilisation and optimal mixing have on the thermal stability of acetal copolymer, thermal stability is not the only quality to be considered in producing such resins. For instance, colour quality, measured by the lightness of the product (Hunter colour "L" values) and the yellowness of the product (Hunter colour "b" values) is also very important. To gain the best colour quality copolymer, maximum "L" values are sought while attempting to minimise "b" values. In order to determine optimum hydrolysis conditions for yielding good colour-quality copolymer melt hydrolysis, runs were made using the single vent devolatilisation zone. The results, which are shown in Figure 6, point to a definitive hydrolysis residence time when the weight percent of triethylamine is 24% and 36%, whereas at low weight percent of TEA, the residence time is not critical. Based on Figure 6, the ideal hydrolysis residence time to achieve the best colour quality is about 5 minutes.

The scope of the present invention necessarily includes the use of various equipment and/or techniques at different stages of the process. For example, at present a preferred embodiment of this invention includes the use of a triple-vented single screw extruder as a devolatilisation zone. The first vent port is not supplied with a vacuum since the autogenous pressure developed in the copolymer by evolution of side products during hydrolysis is greater than atmospheric pressure and sufficient to expunge volatile side products at the point immediately after the hydrolysis zone. Subsequent vent ports, however, are connected to a vacuum source in order to ensure further removal of unwanted side products.

A series of experiments using a copolymer feedstock characterised by the physical properties shown in Table I were made to determine the optimum combination of process features utilising this particular embodiment. The results of these experiments are reported in Table II.

TABLE I
Feedstock properties

| | |
|---|---|
| $K_d$ (%/min.) | 0.035 |
| Melt Index | 9.2 |
| Weight % Ethylene Oxide | 2.65 |
| Ethylene Oxide Distribution | 81% mono-, 19% di-, and 0% tri-oxyethylene units |
| Hunter Colour: | |
| "L" | 85.8 |
| "a" | −0.8 |
| "b" | 6.0 |

TABLE II

| No. | No. of Koch mixing elements | Base/polymer ratio, (%) | TEA Conc. in base, (wt.%) | Resd. time (min.) | Hydrolysis temp., (°C.) | $K_d$, (%/min) | MI | "L" | "a" | "b" |
|---|---|---|---|---|---|---|---|---|---|---|
| 1 | 4 | 9 | 5.0 | 2.4 | 180 | .057 | 22.4 | 87.0 | −1.1 | 7.3 |
| 2 | 4 | 32 | 5.0 | 1.6 | 180 | .025 | 14.8 | 88.7 | −1.3 | 6.2 |
| 3 | 4 | 10 | 20.0 | 1.5 | 180 | .044 | 19.0 | 91.3 | −1.0 | 4.7 |
| 4 | 4 | 26 | 20.0 | 2.4 | 180 | .026 | 14.6 | 85.5 | −1.5 | 12.2 |
| 5 | 4 | 20 | 12.5 | 2.0 | 200 | .041 | 19.0 | 87.7 | −1.0 | 5.8 |
| 6 | 4 | 10 | 5.0 | 1.6 | 220 | .051 | 21.2 | 90.3 | −1.0 | 5.2 |
| 7 | 4 | 29 | 5.0 | 2.4 | 220 | .046 | 29.6 | 88.9 | −1.0 | 6.4 |
| 8 | 4 | 10 | 20.0 | 2.4 | 220 | .046 | 20.8 | 91.0 | −1.0 | 4.8 |
| 9 | 4 | 29 | 20.0 | 1.5 | 220 | .032 | 16.9 | 90.4 | −1.0 | 5.5 |
| 10 | 8 | 20 | 12.5 | 2.0 | 170 | .016 | 10.2 | 84.2 | −0.8 | 10.8 |
| 11 | 8 | 20 | 1.0 | 2.0 | 200 | .021 | 11.3 | 88.9 | −1.1 | 7.1 |
| 12 | 8 | 5 | 12.5 | 2.0 | 200 | .019 | 12.7 | 87.4 | −0.9 | 8.4 |
| 13 | 8 | 20 | 12.5 | 1.2 | 200 | .017 | 11.3 | 89.5 | −1.2 | 6.8 |
| 14 | 8 | 20 | 12.5 | 2.0 | 200 | .023 | 11.2 | 89.4 | −1.2 | 8.0 |
| 15 | 8 | 20 | 12.5 | 2.0 | 200 | .019 | 12.5 | 82.4 | 0.3 | 11.2 |
| 16 | 8 | 20 | 12.5 | 2.8 | 200 | .019 | 12.8 | 89.4 | −1.2 | 6.1 |
| 17 | 8 | 36 | 12.5 | 2.0 | 200 | .022 | 11.5 | 88.2 | −1.2 | 6.8 |
| 18 | 8 | 20 | 24.0 | 2.0 | 200 | .015 | 10.6 | 86.5 | −0.6 | 8.4 |

TABLE II (contd.)

| No. | No. of Koch mixing elements | Base/polymer ratio, (%) | TEA Conc. in base, (wt.%) | Resd. time (min.) | Hydrolysis temp., (°C.) | $K_d$, (%/min) | MI | "L" | "a" | "b" |
|---|---|---|---|---|---|---|---|---|---|---|
| 19 | 8 | 20 | 12.5 | 2.0 | 230 | .016 | 12.3 | 86.3 | −0.6 | 10.1 |
| 20 | 12 | 10 | 5.0 | 1.5 | 180 | .024 | 14.5 | 86.3 | −0.4 | 8.0 |
| 21 | 12 | 30 | 5.0 | 2.5 | 180 | .020 | 12.8 | 86.8 | −0.1 | 6.5 |
| 22 | 12 | 10 | 20.0 | 2.5 | 180 | .021 | 12.4 | 85.0 | −0.1 | 8.6 |
| 23 | 12 | 29 | 20.0 | 1.5 | 180 | .017 | 11.3 | 87.4 | −0.2 | 6.8 |
| 24 | 12 | 20 | 12.5 | 2.0 | 200 | .022 | 11.6 | 88.9 | −0.8 | 5.6 |
| 25 | 12 | 11 | 5.0 | 2.6 | 220 | .020 | 14.3 | 85.3 | −0.2 | 10.4 |
| 26 | 12 | 30 | 5.0 | 1.5 | 220 | .022 | 12.2 | 78.9 | −0.5 | 14.1 |
| 27 | 12 | 10 | 20.0 | 1.5 | 220 | .019 | 11.5 | 87.3 | −0.1 | 5.9 |
| 28 | 12 | 30 | 20.0 | 2.5 | 220 | .018 | 11.4 | 87.6 | −0.7 | 7.6 |

The results generally indicate that as compared to the properties of the feedstock there are significant improvements in at least one characteristic of each sample, and in most samples an improvement is shown in three very important characteristics, i.e., $K_d$ "L" value, and Hunter "a" value, a colour characteristic indicating redness or greenness which is similar to the Hunter "b" value in that a low value is more desirable than a high value. It is suggested that a key factor in producing a copolymer with improved colour quality is the reduced time to complete the hydrolysis which, in turn, is a direct result of being able to use an increased amount of hydrolysis reactant, the thorough mixing achieved by use of static mixers, and the rapid and efficient removal of unwanted side reactants by use of the novel devolatilisation zone disclosed herein.

**Claims**

1. A process for producing stabilised acetal copolymer which comprises:

forming a melt of unhydrolyzed acetal copolymer in a single screw extruder;

extruding the melt into a reaction zone provided with a means for mixing according to the principle of flow division and rearrangement wherein the melt is reacted, with a reactant comprising (a) water, an organic hydroxy-containing compound or a mixture thereof and (b) a compound that produces a hydroxide in the presence of the water and/or organic hydroxy-containing compound, at a temperature of from 160° to 240°C and a pressure of from 150 to 10,000 psia (1034 kPa to 68947 kPa) for a time of from 30 seconds to 15 minutes; and

passing the reactants into a devolatilisation zone arranged immediately after the said reaction zone and wherein undesirable volatile side-products are removed from said copolymer.

2. The process of claim 1, wherein the acetal copolymer is a thermoplastic material having a melting point of at least 150°C.

3. The process of claim 1 or 2 wherein said acetal copolymer is a normally solid oxymethylene copolymer having a melting point above 150°C, the molecules of said copolymer containing from 60 to 99.6 mol percent of comparatively unstable monomeric oxymethylene units interspersed with comparatively stable monomeric —OR— units wherein R is a divalent radical containing at least two carbon atoms directly linked to each other and positioned in the polymer chain between the two valences, with any substituents on said R radical being inert, at least part of the terminal portions of said molecules comprising said unstable monomeric units.

4. The process of claim 1, 2 or 3, wherein the said reactant comprises (a) water, an alcohol or a mixture thereof and (b) a compound that is soluble in (a) and which is selected from alkali metal hydroxides, alkaline earth metal hydroxides, ammonia, amines and amidines.

5. The process of any of claims 1 to 4 wherein the said compound (b) is triethylamine.

6. The process of any of claims 1 to 5 wherein the said compound (b) is present in said reactant in an amount of 0.5% to 85.0% by weight of said reactant.

7. The process of any of claims 1 to 6 wherein the total amount of said reactant in said reaction zone is from 2% to 40% by weight of acetal copolymer.

8. The process of any of claims 1 to 7, wherein the compound (b) is an alkaline material that is present in the mixture of copolymer and reactant in an amount of 0.001 to 1.0% by weight.

9. The process of any of claims 1 to 8 wherein said means for mixing is a static mixer.

10. The process of claim 9 wherein said static mixer comprises an elongated tubular jacket in which there is secured a series of mixing elements joined together.

11. The process of claim 10 wherein the number of mixing elements is from 2 to 15.

12. The process of claim 11, wherein the number of mixing elements is from 4 to 12.

13. The process of any of claims 1—12 wherein said devolatilisation is conducted in a devolatilisation chamber comprising a vented screw extruder.

14. The process of claim 13 wherein said vented extruder has at least three vent ports positioned sequentially downstream of one another, the first of said ports being opened to the atmosphere while the subsequent ports are connected to a vacuum so that the removal of undesirable side products is maximised thereby.

15. An apparatus for performing the process of claim 1 comprising:

a single screw extruder for melting said copolymer;

a reaction zone connected to the output of said single screw extruder, said reaction zone comprising a static mixer; and

a devolatilisation zone arranged immediately after said reaction zone comprising a vented screw extruder.

16. The apparatus of claim 15 wherein said vented screw extruder has at least three vent ports positioned sequentially downstream from one another, the first of said ports being opened to the atmosphere while the subsequent ports are connected to a vacuum so that the removal of undesirable side products is maximised thereby.

**Patentansprüche**

1. Verfahren zur Herstellung eines stabilisierten Acetal-Copolymers, umfassend

das Bilden einer Schmelze eines unhydrolysierten Acetal-Copolymers in einem Einschnecken-Extruder,

das Extrudieren der Schmelze in eine Reaktionszone, die mit einem Mittel zum Vermischen nach dem Prinzip der Strömungsteilung und Umgruppierung versehen ist, in dem die Schmelze mit einem Reaktionspartner, der

(a) Wasser, eine organische, hydroxy-haltige Verbindung oder ein Gemisch aus diesen und

(b) eine Verbindung, die in Gegenwart des Wassers und/oder der organischen, hydroxy-haltigen Verbindung ein Hydroxid erzeugt,

umfaßt, bei einer Temperatur von 160°C bis 240°C und einem Druck von 150 bis 10 000 psia (1034 kPa bis 68947 kPa) während einer Zeitdauer von 30 s bis 15 min umgesetzt wird, und

das Transportieren der Reaktionspartner in eine Zone der Abnahme der flüchtigen Bestandteile, die unmittelbar hinter der Reaktionszone angeordnet ist und in der unerwünschte flüchtige Nebenprodukte aus dem Copolymer entfernt werden.

2. Verfahren nach Anspruch 1, worin das Acetal-Copolymer ein thermoplastisches Material mit einem Schmelzpunkt von wenigstens 150°C ist.

3. Verfahren nach Anspruch 1 oder 2, worin das Acetal-Copolymer ein normalerweise festes Oxymethylen-Copolymer mit einem Schmelzpunkt oberhalb von 150°C ist, wobei die Molekühle des Copolymers 60 bis 99,6 Mol-% vergleichsweise unbeständiger monomerer Oxymethylen-Einheiten durchsetzt mit vergleichsweise beständigen monomeren —OR—Einheiten, enthalten, wobei R ein zweiwertiger Rest ist, der wenigstens zwei direkt miteinander verbundene und in der Polymer-Kette zwischen den beiden Valenzen angeordnete Kohlenstoff-Atome enthält, wobei etwaige Substituenten des Restes R inert sind, und wenigstens ein Teil der endständigen Abschnitte der Molekühle unbeständige monomere Einheiten enthalten.

4. Verfahren nach Anspruch 1, 2 oder 3, worin der genannte Reaktionspartner

(a) Wasser, einen Alkohol oder eine Mischung aus diesen und

(b) eine Verbindung, die in (a) löslich ist und aus Alkalimetallhydroxiden, Erdalkalimetallhydroxiden, Ammoniak, Aminen und Amidinen ausgewählt ist, enthält.

5. Verfahren nach irgendeinem der Ansprüche 1 bis 4, worin die Verbindung (b) Triethylamin ist.

6. Verfahren nach irgendeinem der Ansprüche 1 bis 5, worin die Verbindung (b) in dem Reaktionspartner in einer Menge von 0,5 bis 85 Gew.-%, bezogen auf den Reaktionspartner, vorliegt.

7. Verfahren nach irgendeinem der Ansprüche 1 bis 6, worin die Gesamtmenge des Reaktionspartners in der Reaktionszone 2 bis 40 Gew.-%, bezogen auf das Acetal-Copolymer, beträgt.

8. Verfahren nach irgendeinem der Ansprüche 1 bis 7, worin die Verbindung (b) ein alkalisches Material. ist, das in der Mischung aus Copolymer und Reaktionspartner in einer Menge von 0,001 bis 1,0 Gew.-% vorliegt.

9. Verfahren nach irgendeinem der Ansprüche 1 bis 8, worin das Mittel zum Vermischen ein statischer Mischer ist.

10. Verfahren nach Anspruch 9, worin der statische Mischer einen langgestreckten röhrenförmigen Mantel umfaßt, in dem eine Reihe von miteinander verbundenen Mischelementen befestigt ist.

11. Verfahren nach Anspruch 10, worin die Zahl der Mischelemente 2 bis 15 beträgt.

12. Verfahren nach Anspruch 11, worin die Zahl der Mischelemente 4 bis 12 beträgt.

13. Verfahren nach irgendeinem der Ansprüche 1 bis 12, worin die Abnahme der flüchtigen Bestandteile in einer Kammer zur Entfernung flüchtiger Bestandteile erfolgt, die einen Schneckenextruder mit Entlüftung umfaßt.

14. Verfahren nach Anpruch 13, worin der Schneckenextruder mit Entlüftung wenigstens drei Abluft-Öffnungen umfaßt, die der Reihe nach in Strömungsrichtung hintereinander angeordnet sind, wobei die erste dieser Öffnungen zur Atmosphäre hin geöffnet ist, während die nachfolgenden Öffnungen mit Vakuum verbunden sind, so daß die Entfernung unerwünschter Nebenprodukte dadurch maximiert wird.

15. Apparatur zur Durchführung des Verfahrens nach Anspruch 1, umfassend

einen Einschneckenextruder zum Schmelzen des Copolymers,

eine Reaktionszone, die mit der Austragöffnung des Einschneckenextruders verbunden ist, wobei die Reaktionszone einen statischen Mischer umfaßt, und

eine unmittelbar hinter der Reaktionszone angeordnete Zone zur Abnahme der flüchtigen Bestandteile, die einen Schneckenextruder mit Entlüftung umfaßt.

16. Apparatur nach Anspruch 15, worin der Schneckenextruder mit Entlüftung wenigstens drei Abluft-Öffnungen umfaßt, die der Reihe nach in Strömungsrichtung hintereinander angeordnet sind, wobei die erste dieser Öffnungen zur Atmosphäre hin geöffnet ist, während die nachfolgenden Öffnungen mit Vakuum verbunden sind, so daß die Entfernung unerwünschter Nebenprodukte dadurch maximiert wird.

**Revendications**

1. Procédé de production d'un copolymère acétal stabilisé qui comprend:

la formation d'une masse fondue d'un copolymère acétal non hydrolysé dans une extrudeuse à vis simple;

l'extrusion de la masse fondue dans une zone réactionnelle pourvue d'un moyen pour mélanger selon le principe de la division d'écoulement et du réarrangement où l'on fait réagir la masse fondue avec un réactif comprenant (a) de l'eau, un composé organique contenant un hydroxy ou un mélange et (b) un composé qui produit un hydroxyde en présence de l'eau et/ou du composé organique contenant un hydroxy, à une température de 160° à 240°C et à une pression de 150 à 10.000 psia (1.034 kPa à 68.947 kPa) pendant un temps compris entre 30 secondes et 15 minutes; et

le passage des réactifs dans une zone de dévolatilisation agencée juste après ladite zone réactionnelle et où les produits secondaires volatils non souhaitables sont éliminés dudit copolymère.

2. Procédé de la revendication 1, où le copolymère acétal est une matière thermoplastique ayant un point de fusion d'au moins 150°C.

3. Procédé de la revendication 1 ou 2, où ledit copolymère acétal est un copolymère d'oxyméthylène normalement solide ayant un point de fusion au delà de 150°C, les molécules dudit copolymère contenant de 60 à 99,6% en moles d'unités comparativement instables d'un monomère d'éthylène entremêlées d'unités comparativement stables d'un monomère —OR— où R est un radical divalent contenant au moins deux atomes de carbone qui sont directement liés l'un à l'autre et se trouvant dans la chaîne du polymère entre les deux valences, tout substituant sur ledit radical R étant inerte, au moins une partie des portions terminales desdites molécules comprenant lesdites unités instables de monomère.

4. Procédé de la revendication 1, 2 ou 3, où ledit réactif comprend (a), de l'eau, un alcool ou un mélange et (b) un composé qui est soluble dans (a) et qui est choisi parmi des hydroxydes de métaux alcalins, des hydroxydes de métaux alcalino-terreux, l'ammoniac, des amines et des amidines.

5. Procédé selon l'une des revendications 1 à 4, où ledit composé (b) est la triéthylamine.

6. Procédé de l'une des revendications 1 à 5, où ledit composé (b) est présent dans ledit réactif en une quantité de 0,5% à 85,0% en poids dudit réactif.

7. Procédé selon l'une des revendications 1 à 6, où la quantité totale dudit réactif dans ladite zone réactionnelle est comprise entre 2% et 40% en poids du copolymère acétal.

8. Procédé selon l'une des revendications 1 à 7, où le composé (b) est une matière alcaline qui est présente dans le mélange du copolymère et du réactif en une quantité de 0,001 à 1,0% en poids.

9. Procédé selon l'une des revendications 1 à 8, où ledit moyen pour mélanger est un mélangeur statique.

10. Procédé de la revendication 9, où ledit mélangeur statique comprend une chemise tubulaire allongée où est fixée une série d'éléments de mélange qui sont joints ensemble.

11. Procédé de la revendication 10, où le nombre d'éléments de mélange est de 2 à 15.

12. Procédé de la revendication 11, où le nombre d'éléments de mélange est de 4 à 12.

13. Procédé selon l'une des revendications 1—12 où la dévolatilisation est entreprise dans une chambre de dévolatilisation comprenant une extrudeuse à vis éventée.

14. Procédé de la revendication 13, où ladite extrudeuse éventée a au moins trois orifices d'évent qui sont placés séquentiellement en aval l'un de l'autre, le premier desdits orifices étant ouvert vers l'atmosphère tandis que les orifices subséquents sont connectés à un vide de manière que l'élimination des produits secondaires non souhaitables soit ainsi rendue maximale.

15. Appareil pour accomplir le procédé de la revendication 1 comprenant:

une extrudeuse à vis simple pour la fusion dudit copolymère;

une zone réactionnelle connectée à la sortie de ladite extrudeuse à vis simple, ladite zone réactionnelle comprenant un mélangeur statique; et

une zone de dévolatilisation agencée juste après ladite zone réactionnelle, comprenant une extrudeuse à vis éventée.

16. Appareil de la revendication 15, où ladite extrudeuse à vis éventée a au moins trois orifices d'évent qui sont placés séquentiellement en aval es uns des autres, le premier desdits orifices étant ouvert vers l'atmosphère tandis que les orifices subséquents sont connectés à un vide de manière que l'élimination des produits secondaires non souhaitables soit ainsi rendue maximale.

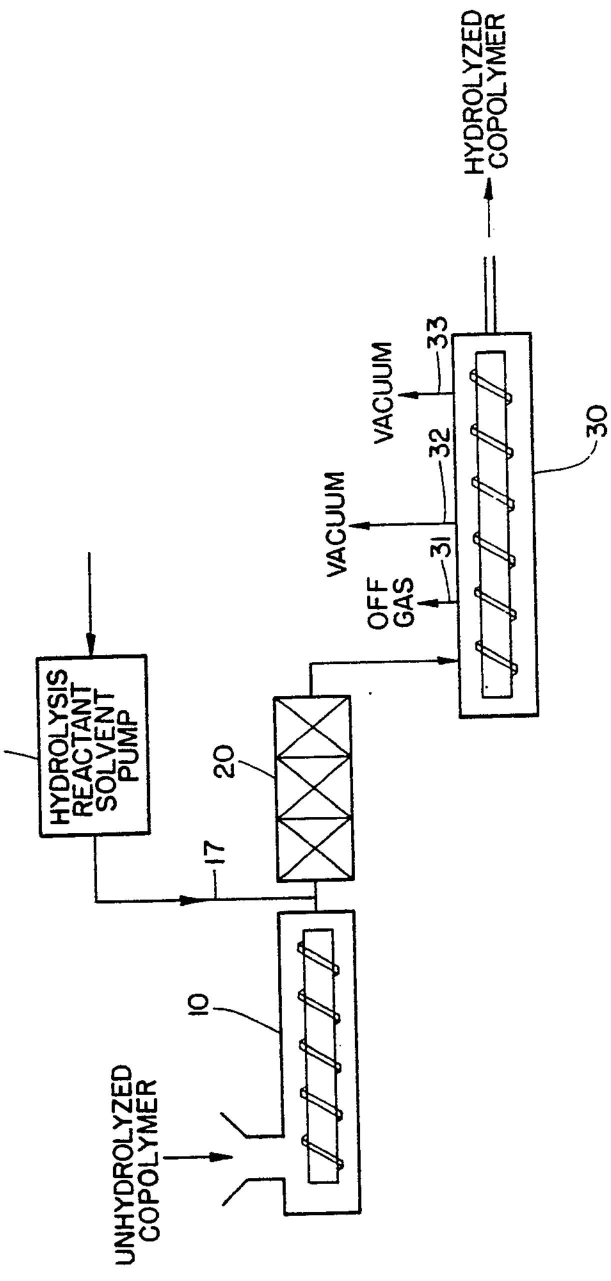
HYDROLYZED COPOLYMER
VACUUM
33
VACUUM
32
30
31
OFF GAS
HYDROLYSIS REACTANT SOLVENT PUMP
16
20
17
10
UNHYDROLYZED COPOLYMER

FIG.1

EFFECT OF DEVOLATILIZATION
ON THE QUALITY OF
MELT – HYDROLYZED ACETAL COPOLYMER

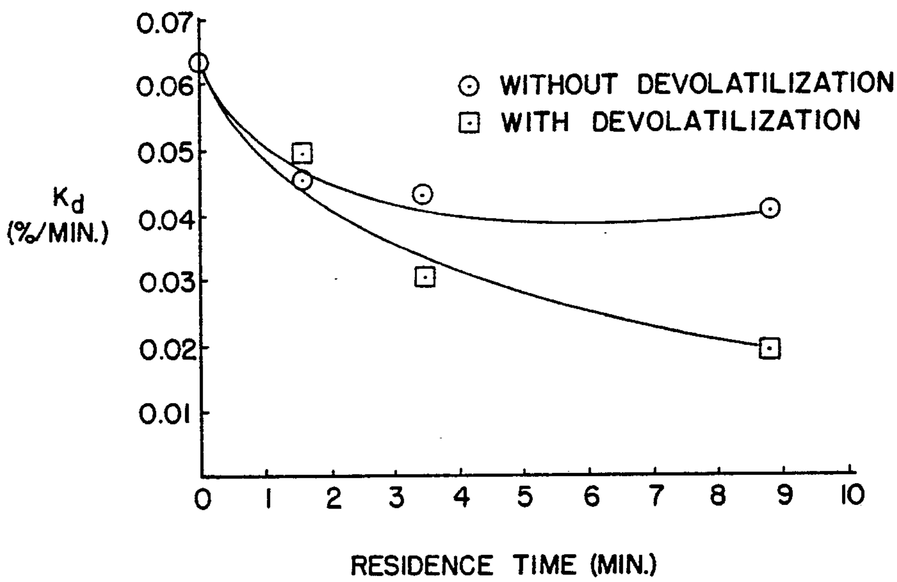


EXPT. CONDITIONS: 8 KOCH ELEMENTS
190° C
10 % BASE
1 % TEA IN TEA/$H_2O$ ((50.8 kPa))
DEVOLATILIZATION (15 IN VACUUM)

FIG. 2

EFFECT OF DEVOLATILIZATION ON THERMAL STABILITY
OF MELT-HYDROLYZED ACETAL COPOLYMER

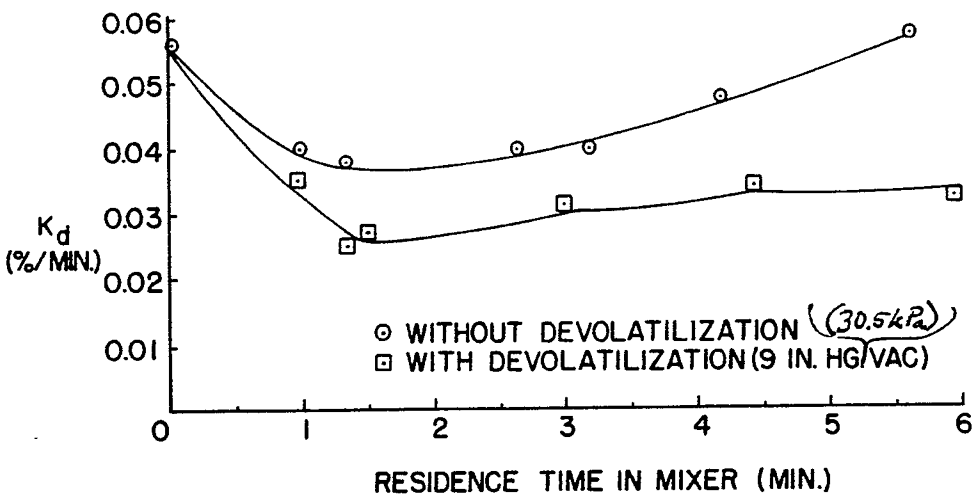


EXPT. CONDITIONS

(1) HYDROLYSIS AT 190°C
(2) 8 KOCH MIXING ELEMENTS
(3) 40% BASE (ON POLYMER)
(4) 82.5 WT.% TEA IN BASE

FIG. 3

EFFECT OF DEGREE OF MIXING

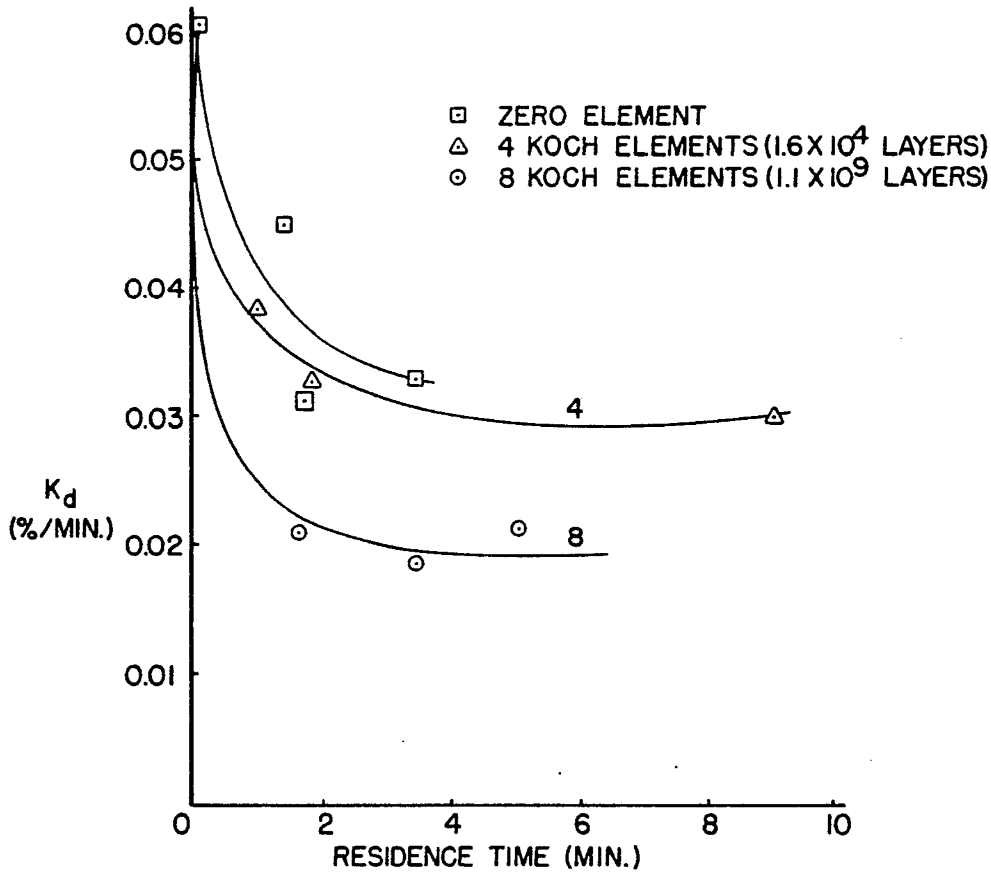


EXPT. CONDITIONS

(A) 190° C
(B) 10% TEA IN TEA/$H_2O$
(C) 30% BASE (ON POLYMER)
(D) DEVOLATILIZATION (16 IN. VACUUM) [(54.2 kPa)]

FIG. 4

EFFECT OF DEGREE OF MIXING ON THERMAL STABILITY OF MELT-HYDROLYZED ACETAL COPOLYMER

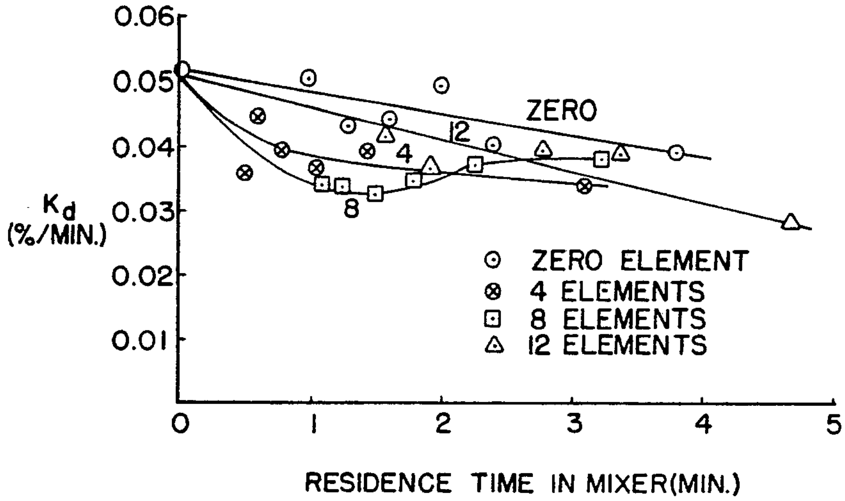


EXPT. CONDITIONS

(1) HYDROLYSIS AT 190°C
(2) 20 % BASE (ON POLYMER)
(3) 2 % TEA IN BASE
(4) DEVOLATILIZATION (17 IN. HG ((57.6 kPa)) VAC.)

FIG. 5

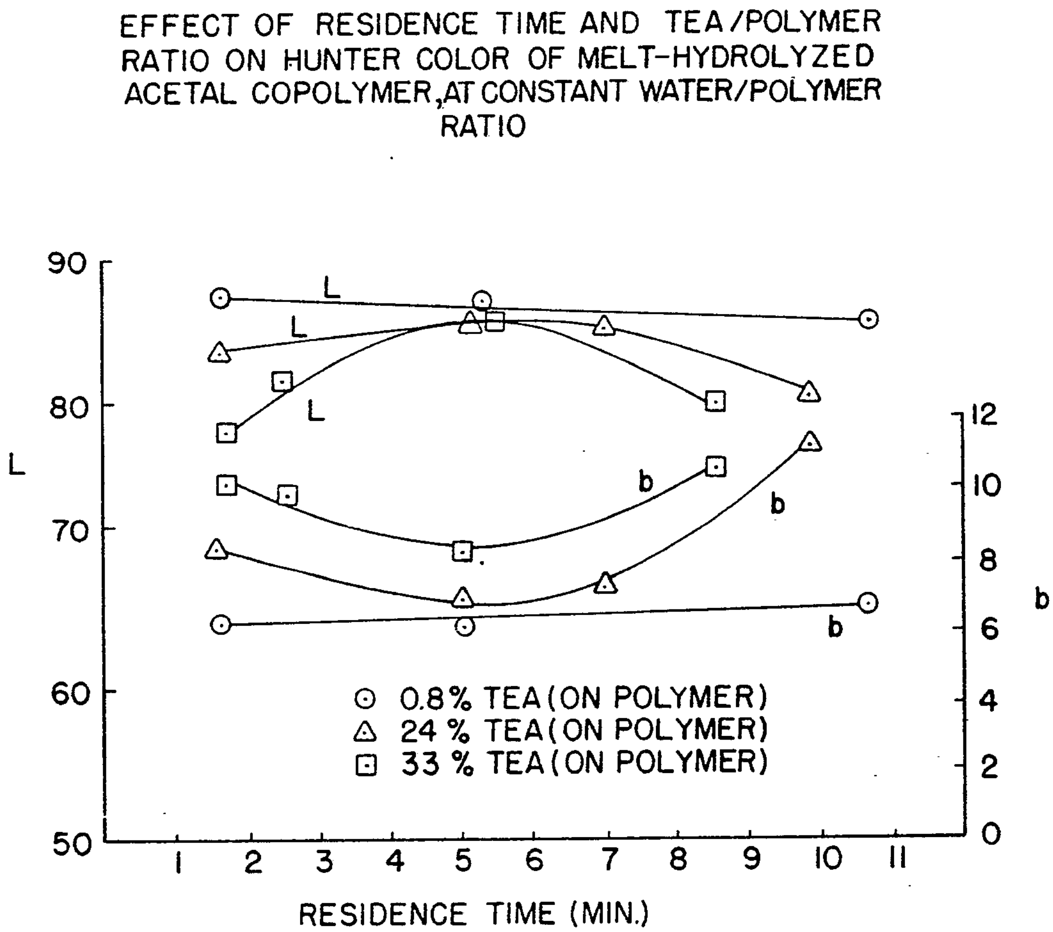


EXPT. CONDITIONS

(A) WATER/POLYMER RATIO CONSTANT (7%)
(B) % BASE (ON POLYMER) VARIED 7.8 TO 40%
(C) 8 ELEMENTS
(D) 190° C
(E) DEVOLATILIZATION (12 IN. (40.6 kPa) VACUUM)

FIG. 6

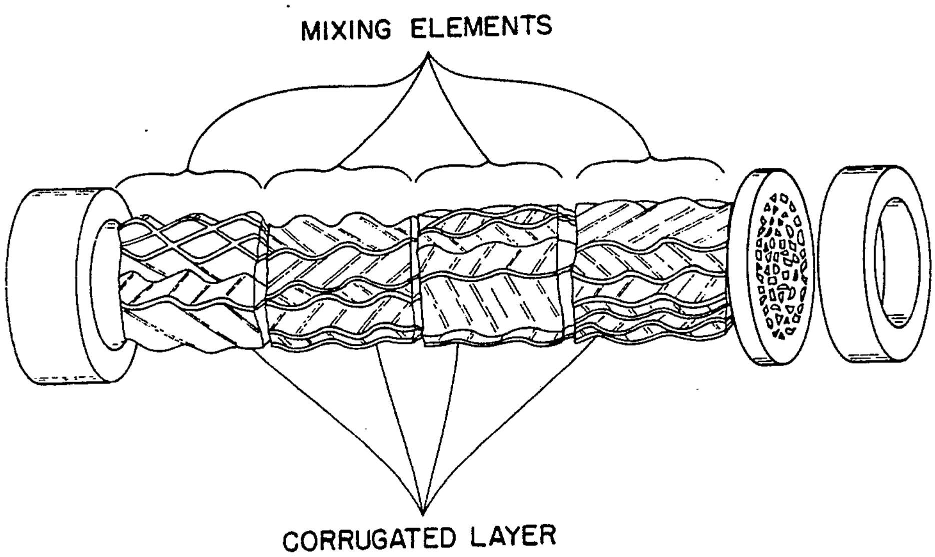


FIG.7